# EUROPEAN PATENT SPECIFICATION

(11) **EP 3 640 457 B1**
(45) Date of publication and mention of the grant of the patent: **07.09.2022**
(21) Application number: 19198380.8
(22) Date of filing: 19.09.2019
(51) Int. Cl.: F02C 7/275, F02C 7/277, F02C 7/32

(54) **PARALLEL STARTER/GENERATOR AND AIR TURBINE STARTER**
PARALLELER STARTER/GENERATOR UND LUFTTURBINENSTARTER
DÉMARREUR/GÉNÉRATEUR PARALLÈLE ET DÉMARREUR DE TURBINE À AIR

(30) Priority: 18.10.2018 US 201862747412 P; 27.11.2018 US 201816201824; 27.11.2018 US 201816201831; 27.11.2018 US 201816201835; 27.11.2018 US 201816201837
(43) Date of publication of application: 22.04.2020
(73) Proprietor: Rolls-Royce North American Technologies, Inc., Indianapolis, IN 46241 (US)
(72) Inventor: Kusnierek, John, Springfield, OH 45502 (US); Starr, Matthew, Indianapolis, IN 46221 (US)
(74) Representative: Rolls-Royce plc

(56) References cited:
- US-A- 3 188 479
- US-A1- 2006 260 323
- US-A1- 2017 234 235
- US-A1- 2018 030 900

## Description

Turbine engines extract energy to perform work by compressing a working fluid, mixing a fuel into the compressed working fluid, igniting the fuel/fluid mixture, and expanding the combusted fuel/fluid mixture through a turbine. When a turbine is operating, a portion of the extracted energy is provided as the work input to the engine's compressor, thereby making turbine operation self-sustaining. Prior to reaching this self-sustaining point, the work input to drive the compressor must be supplied by some system other than the turbines of the engine. These other systems often incorporate a starter - such as an electric starter or an air turbine starter - that provides the motive force to turn the engine compressor, thereby providing an airflow to the turbine that can, eventually, provide enough work output to drive the compressor. Such starters are often connected to the spool housing the compressor through gearboxes and shafting.

US2006/260323 and US2018/030900 both exemplify gas turbine arrangements having electric starters.

According to a first aspect of the present disclosure there is provided a system for starting a turbine engine in accordance with Claims 1 to 10..

In some embodiments, the second gearbox may have a first gear ratio between the electric-starter shaft and the gearbox input shaft, and a second gear ratio between the air-turbine-starter shaft and the gearbox input shaft.

In some embodiments, the air-turbine-starter shaft may be selectively coupleable to the gearbox input shaft.

In some embodiments, the system may further include a mounting member coupling one of the electric starter and the air turbine starter to a casing of the turbine engine.

In some embodiments, the mounting member may include a damping member.

In some embodiments, the electric starter and the air turbine starter may be located on the same side of the gearbox.

In some embodiments, the electric-starter shaft and the air-turbine-starter shaft may be radially displaced, with respect to the axis of the turbine engine, from the gearbox input shaft.

According to some aspects of the present disclosure, a system for starting a turbine engine is provided. The system comprises a gearbox, an electric starter, and an air turbine starter. The gearbox has a gearbox input shaft. The gearbox may be coupled to the turbine engine. The electric starter has an electric-starter shaft. The electric starter is coupled to the gearbox input shaft. The electric starter is a starter-generator connected alternatively between an auxiliary power source and an auxiliary load. The air turbine starter has an air-turbine-starter shaft. The air turbine starter is coupled to said gearbox input shaft. Only one of the electric-starter shaft or air-turbine-starter shaft is coaxial with the gearbox input shaft.

In some embodiments, the system may further include a second gearbox coupling both of the electric-starter shaft and air-turbine-starter shaft to the gearbox input shaft.

In some embodiments, the second gearbox may have a first gear ratio between the electric-starter shaft and the gearbox input shaft, and a second gear ratio between the air-turbine-starter shaft and the gearbox input shaft.

In some embodiments, the air-turbine-starter shaft may be selectively coupleable to the gearbox input shaft.

In some embodiments, the system may further include a mounting member coupling one of the electric starter and the air turbine starter to a casing of the turbine engine.

In some embodiments, the mounting member may include a damping member.

In some embodiments, both of the electric starter and the air turbine starter may be located on the same side of the gearbox.

In some embodiments, the electric-starter shaft may be selectively coupleable to the gearbox input shaft.

According to the invention, the electric-starter shaft and the air-turbine-starter shaft are radially displaced, circumferentially displaced, or both radially and circumferentially displaced, with respective to an axis of the turbine engine, from one another.

According to some aspects of the present disclosure, a method of operating a turbine starting system according to Claims 11 to 14 is provided.

In some embodiments, the method may further include rotating the air turbine starter. The rotation of the air turbine starter may cause the rotation of the gearbox input shaft and the electric starter.

In some embodiments, the method may further include decoupling the air turbine starter from the gearbox input shaft. The rotation of the gearbox input shaft may be accomplished by applying a motive force to the electric starter that causes the rotation of the electric starter.

The following will be apparent from elements of the figures, which are provided for illustrative purposes.

Fig. 1 is perspective view of a turbine engine and an auxiliary gearbox.

Fig. 2 is a perspective view of the auxiliary gearbox of Fig. 1.

Fig. 3 is a perspective view of a dual mode starter generator in accordance with examples not forming part of the invention as claimed. some

Fig. 4 is a perspective view of the dual mode starter generator of Fig. 3 installed on an auxiliary gearbox.

Fig. 5 is an axial profile view of the installed dual mode starter generator of Fig. 4.

Figs. 6A-6E are block diagrams of various dual mode starter generators in accordance with some examples not forming part of the invention as claimed.

Figs. 7A-7B are block diagrams of various dual mode starter generators in accordance with some examples not forming part of the invention as claimed.

Figs. 8A-8B are block diagrams of various dual mode starter generators in accordance with some examples not forming part of the invention as claimed.

Figs. 9A-9B are block diagrams of various dual mode starter generators in accordance with some embodiments of the invention and some examples not forming part of the invention as claimed,

Figs. 10A-10B are block diagrams of various methods of starting a turbine engine having a dual mode starter generator in accordance with some embodiments.

The present application discloses illustrative *(i.e.,* example) embodiments. The claimed inventions are not limited to the illustrative embodiments. Therefore, many implementations of the claims will be different than the illustrative embodiments. Various modifications can be made to the illustrative embodiments, provided they fall within the scope of the appended claims that defines the invention.

For the purposes of promoting an understanding of the principles of the disclosure, reference will now be made to a number of illustrative embodiments in the drawings and specific language will be used to describe the same.

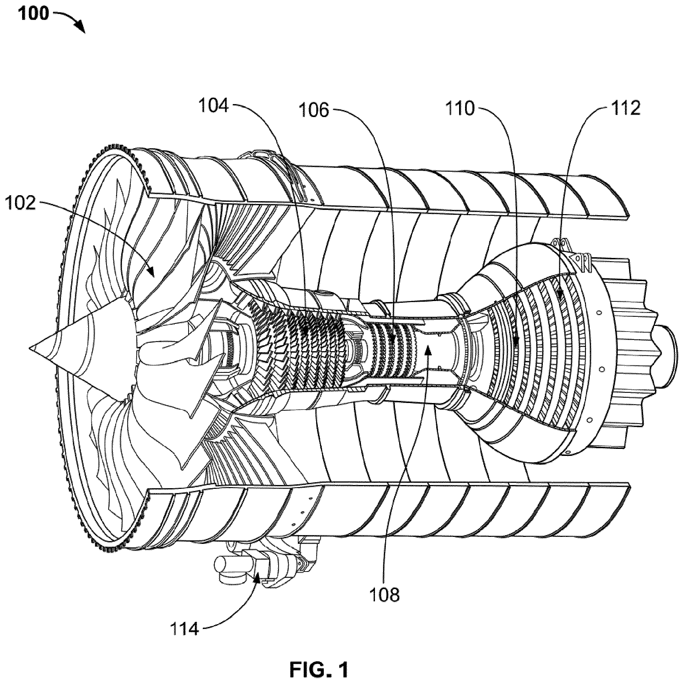

Illustrated in Fig. 1 is a perspective view of a turbine engine 100. The turbine engine 100 may be a gas turbine engine, and may comprise a fan 102, compressor sections 104 and 106, combustor 108, turbine sections 110 and 112, and an auxiliary gearbox 114. Compressor section 106 and turbine section 110 may each be coupled to a common spool, often known as the high pressure spool. Similarly, compressor section 104 and turbine section 112 may each be coupled to a different common spool, often known as the low pressure spool. Fan 102 is also coupled to the low pressure spool either directly such that fan 102 rotates at the same speed as compressor section 104 and turbine section 112 or through a gear system.

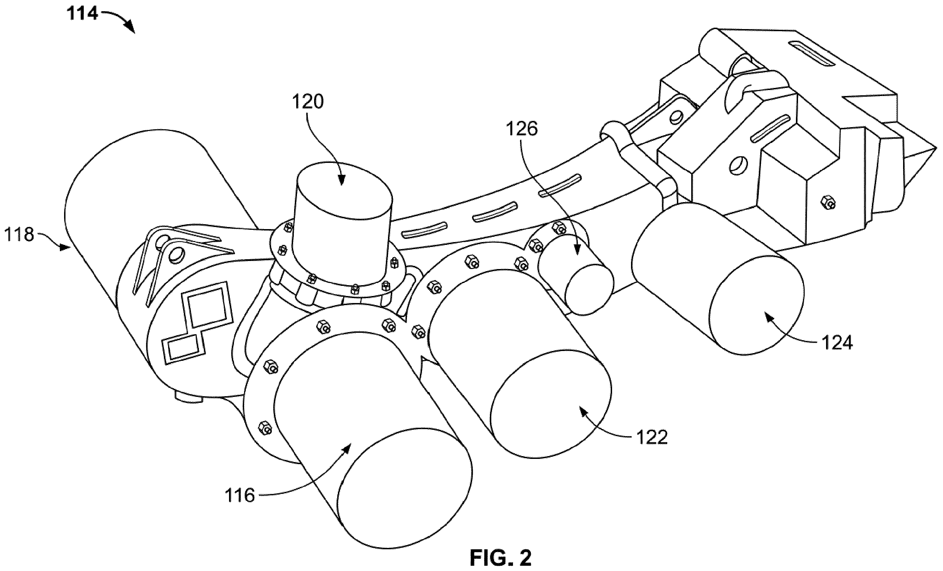

During operation of turbine engine 100, incoming air is pressurized by compressor section 104 and then compressor section 106. The compressed air is then mixed with fuel and ignited in combustor 108. The combusted air/fuel mixture is then expanded through turbine section 110 and turbine section 112. Work is extracted from the combusted air/fuel mixture during its expansion through the turbine sections. The work extracted by turbine section 110 may be used to power compressor section 106 and various auxiliary loads. These auxiliary loads may be coupled to the auxiliary gearbox 114 *(see* Fig. 2) that is, in turn, coupled to the high pressure spool through gearing and/or shaft work.

As explained earlier, the above operation is self-sustaining, meaning that the work output of the turbine sections, and in particular turbine section 110, is alone sufficient to drive the compressor sections, and in particular compressor section 106, such that the incoming air is pressurized so that the air/fuel mixture can be combusted and provide the required energy to drive the turbines. Until the operation of the turbine engine 100 is self-sustaining, work must be provided from some component other than turbines to rotate the compressors. These other components are referred to as starters.

Two types of starters are electric starters and air turbine starters (ATS). Both types of starters may be configured to bring a turbine engine 100 from rest to a point of self-sustaining operation. The electric starter converts electrical energy into rotational motion that drives one or more spools of the turbine engine. This electrical power could be supplied by systems onboard an aircraft (e.g., batteries or other electrical power storage devices, or electrical power generators (e.g., an auxiliary power unit (APU), another main turbine engine, etc.)), or systems external to the aircraft *(e.g.,* a starting cart, etc.). An ATS expands a working fluid through a turbine to convert the working fluid energy into rotational motion that drives one or more spools of the turbine engine. The working fluid for an ATS may be supplied by aircraft components *(e.g.,* APU, another main turbine engine), or systems external to the aircraft *(e.g.,* a starting cart, etc.).

Electric starters and ATS's maybe coupled to one or more spools of the turbine engine 100 through an auxiliary gearbox. Fig. 2 illustrates an auxiliary gearbox 114. Connected to auxiliary gearbox 114 are a number of components, including an ATS 116, generator 118 *(e.g.,* an integrated drive generator), fuel pump 120, hydraulic pump 122, oil pump 124, and permanent magnet alternator 126.

The location at which each of these components is coupled to the auxiliary gearbox 114 is known as a pad. Auxiliary gearbox pads and their associated internal auxiliary gearbox components are often designed to accommodate the specific loads of the component that couples to the pad. For example, the pad (and internal auxiliary gearbox components) to which ATS 116 is coupled is designed to support the high torque load from ATS 116 required to start the turbine engine 100, as well the static and dynamic loads from the structure of ATS 116 *(e.g.,* bending moments). Additional components, e.g., a clutch, may be used between the ATS 116 and some components of the auxiliary gearbox 114 such that ATS 116 is not driven by the turbine engine 100 once it reaches a self-sustaining condition. Likewise, the pad to which generator 118 is connected is configured for high speed operation such that generator 118 can supply electrical power to aircraft loads during flight. However, this pad may not be capable of supporting the large, starting torque load from ATS 116.

As such, the particular components that can be coupled to a given auxiliary gearbox pad may be limited. Additionally, a turbine engine is often paired with a particular auxiliary gearbox. While a turbine engine may provide the thrust that is sufficient for an application, the electric capacity for auxiliary loads (from, e.g., generator 118) may be insufficient for that application, or a consumer may find it desirable to provide more than one mode of starting the engine. Such demands may be addressed by a redesign of the auxiliary gearbox to support different or additional components, changing the auxiliary gearbox that is mated to a particular turbine, or selection of a different turbine engine. However, these options come at a large cost.

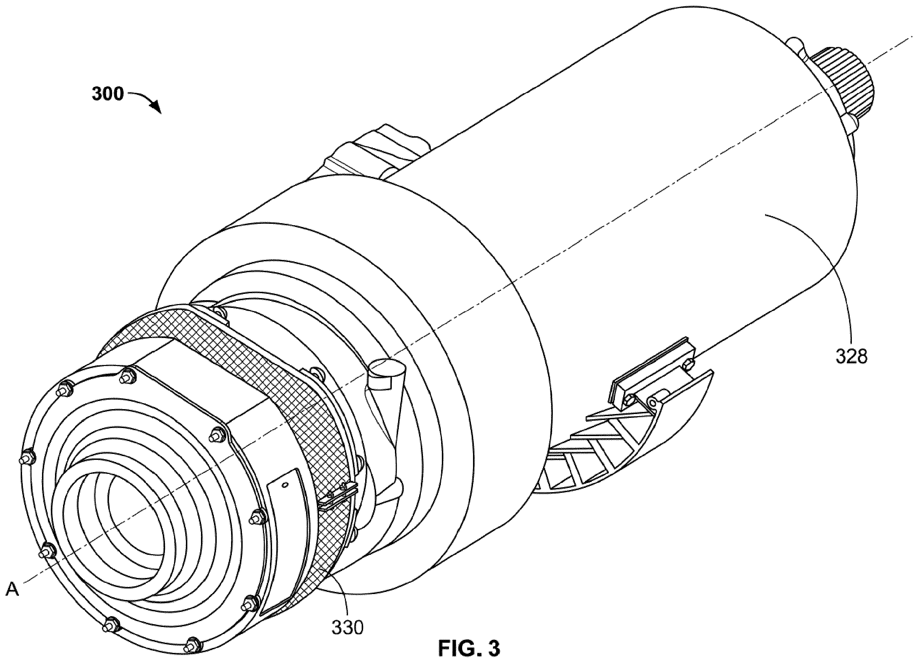

As disclosed herein, the described embodiments overcome these limitations of the auxiliary gearboxes and components mounted thereto by utilizing dual mode electric starter/generator (DMSG) 300. An example of a DMSG 300 is illustrated in Fig. 3. The DMSG 300 may comprise a first starter 328 and a second starter 330, which may be an electric starter or an air turbine starter, respectively. In accordance with some embodiments, the electric starter 328 may be an electric starter-generator (ESG) in which the ESG can provide electrical energy to auxiliary loads of the aircraft when the ESG is powered by the gas turbine.

As can be seen in Fig. 3., in an example not forming part of the invention as claimed, the first and second starters, 328 and 330, may be coaxial with axis 'A.' The first and second starters, 328 and 330, may be coupled to one another such that one starter is axially forward, with respective to the turbine engine in which they are mounted, of the other. For example, second starter 330 may be axially forward of first starter 328.

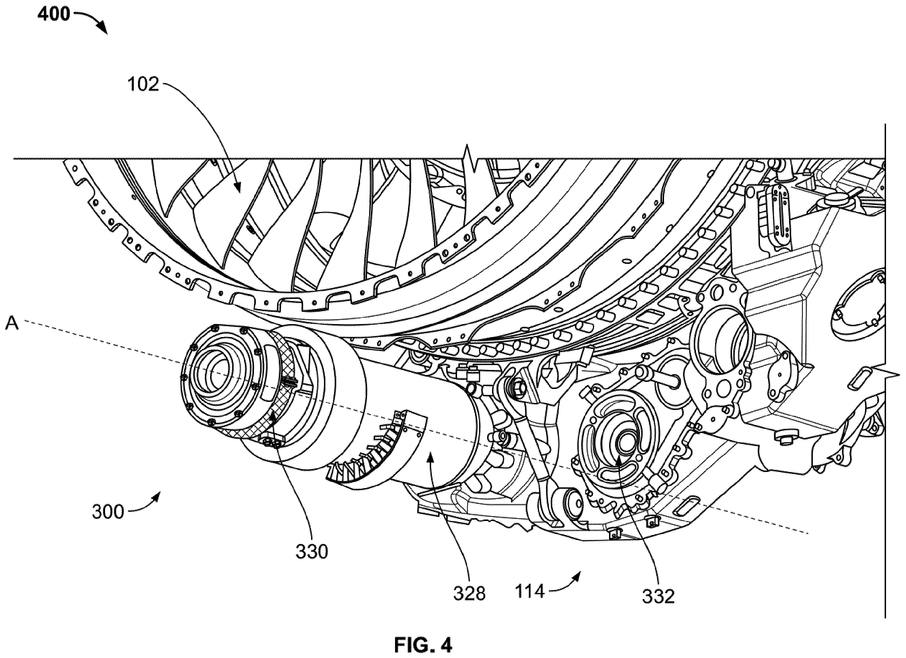

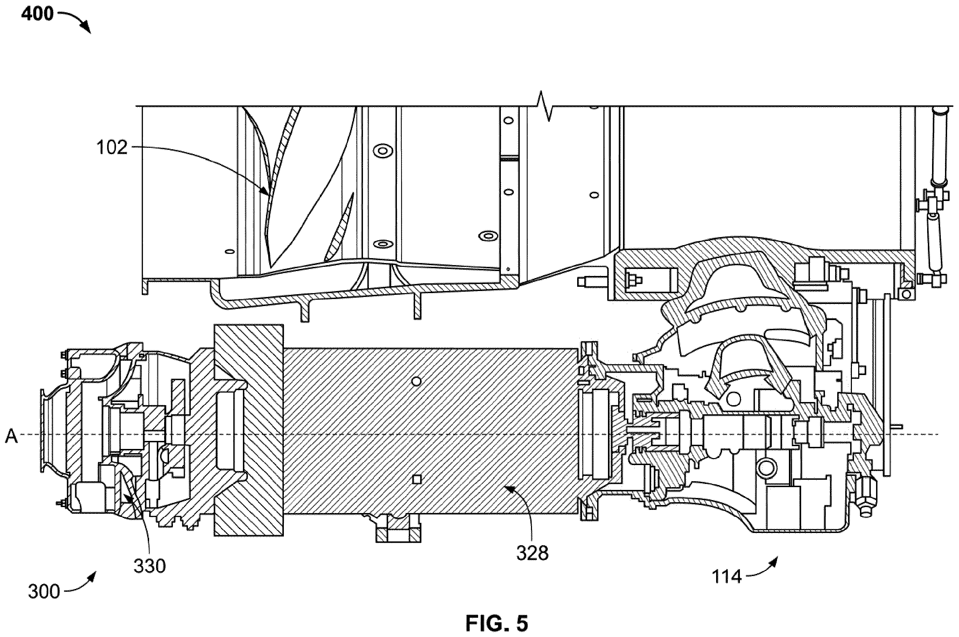

The placement of DMSG 300 is further illustrated in Figs. 4 and 5. Fig. 4 illustrates a perspective view of DMSG 300 mounted on auxiliary gearbox (AGB) 114 in relation to fan 102 of turbine 400. Further illustrated is pad 332 of AGB 114, to which a component may be coupled.

DMSG 300 may be mounted onto a pad, such the pad to which ATS 116 is coupled, that is capable of supporting the torque required to start turbine 400. By supplying the outputs of starters 328 and 330 to a single pad, two different modes of starting turbine 400, electric and pneumatic, may be achieved without redesigning or changing AGB 114. Additionally, the electric starter 328 may also function as a generator, thereby allowing for more electrical power generation without changing generator 118 or otherwise changing AGB 114 to support an additional generator.

Fig. 5 illustrates an axial cross section view of the turbine 400 of Fig. 4. As can be seen, DMSG 300 is mounted axially forward of AGB 114. ATS 330 may be located axially forward of and coupled to electric starter 328.

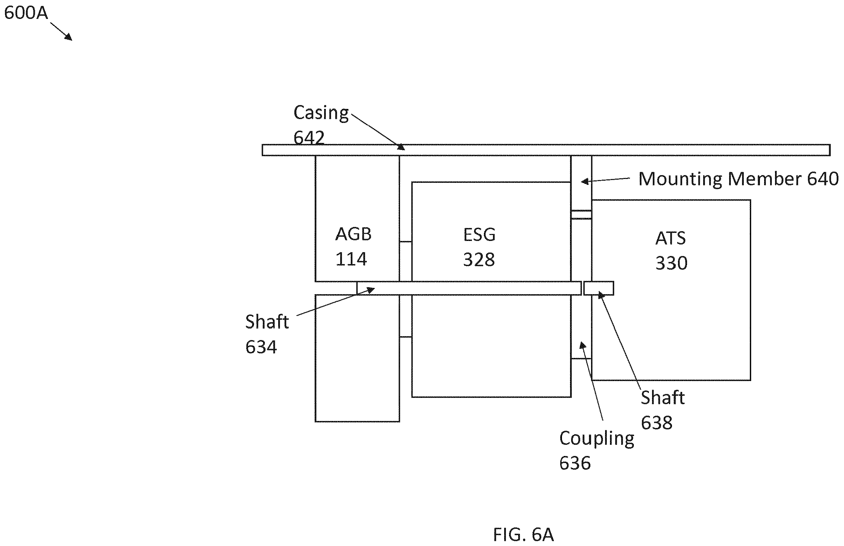

In accordance with some examples not forming part of the invention as claimed, block diagrams of dual mode starter generator systems 600A-E are illustrated in Figs. 6A-6E. With reference to Fig. 6A, the system 600A may comprise an AGB 114, ESG 328 and ATS 330. AGB 114 may have an input shaft 634. ESG 328 may be permanently coupled to the input shaft 634. As used herein, "permanently coupled" is used to indicate a connection that is not provided for by a selectively coupling means, such as a clutch. In other words, each of the two components permanently coupled to one another will always rotate when one of those components is rotating.

ATS 330 may be selectively coupled to ESG 328 (and therefore input shaft 634) via a coupling 636. Coupling 636 may be, a clutch *(e.g.,* an overrunning clutch, a hydraulic clutch or friction clutch, etc.). An overrunning clutch allows a starting torque to be transferred out of ATS 330, but prevents the ATS 330 from being driven through the coupling 636 by the turbine or ESG 328. Various types of overrunning clutches are known, e.g., sprang, roller ramp, wrap, and wedge style clutches. ATS 330 may having an output shaft 638 that is coupled to the coupling 636. Output shaft 638 may be coaxial with input shaft 634.

In accordance with some embodiments, ATS 330 may be mounted onto and supported by ESG 328. By mounting one of the starters *(e.g.,* ATS 330) onto the other *(e.g.,* ESG 328) the DMSG may be coupled to a single pad and input shaft 634 of AGB 114. However, this particular method of coupling the DMSG to AGB 114 may require reinforcement of AGB 114 or other components to support the additional weight of DMSG compared to a lone ATS or ESG. For example, DMSG system 600A may further comprise a mounting member 640 that is configured to support the weight of the DMSG of system 600A. In accordance with some embodiments, mounting member 640 may comprise a component configured to dampen the dynamic, moment load placed on the AGB during aircraft maneuvers. For example, mounting member 640 may comprise springs, shocks, or both. In accordance with some embodiments, the shocks may be an active damper that dynamically changes the damping rate of mounting member 640.

Mounting member 640 may couple the DMSG to a casing 642 or other structural element of the turbine engine. Mounting member 640 may be coupled to ESG 328, ATS 330, or both.

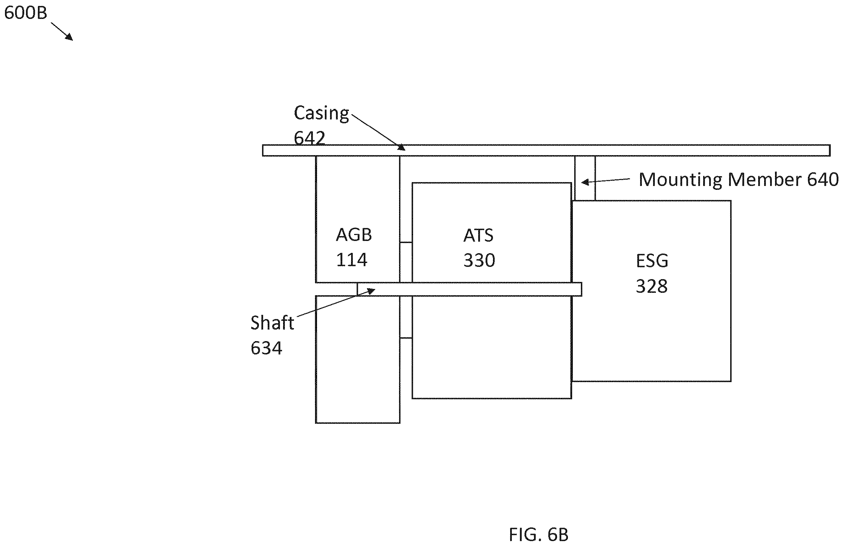

Turning to Fig. 6B, another DMSG system 600B is illustrated. The DMSG system 600B of Fig. 6B is similar to that shown in Fig. 6A with some differences. Here, ATS 330 is permanently coupled to or mounted on input shaft 634. Additionally, ATS 330 and ESG 328 have switched positions such that ESG 328 is now more distance from AGB 114 than is ATS 330.

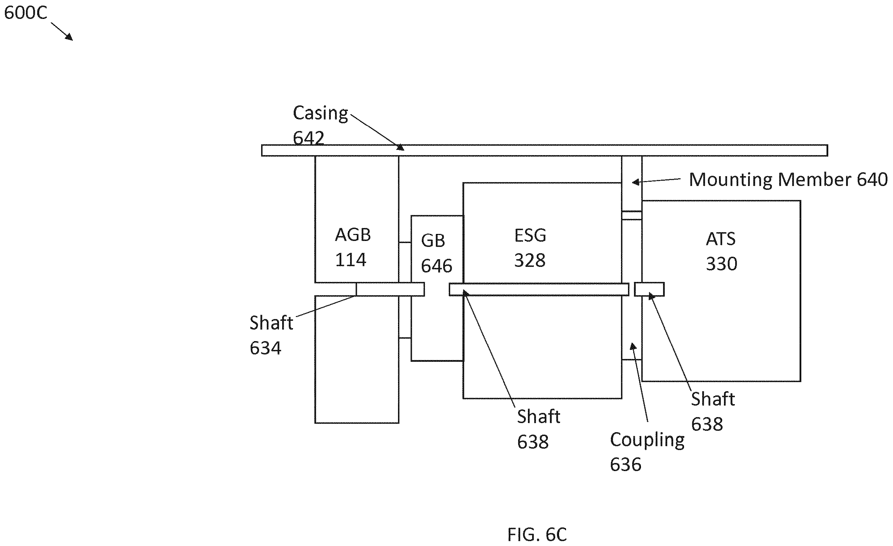

In accordance with some examples not forming part of the invention as claimed, a DMSG system 600C is illustrated in Fig. 6C. System 600C is similar to system 600A with the addition of gearbox 646. Gearbox 646 may be coupled to input shaft 634 and output shaft 638 of ESG 328. Gearbox 646 may be necessary to increase or decrease the torque output from ESG 328, ATS 330, or both. As further shown below, additional gearboxes may be placed between the ESG 328 and ATS 330 to account for the different torque profiles and operating speeds between these two components.

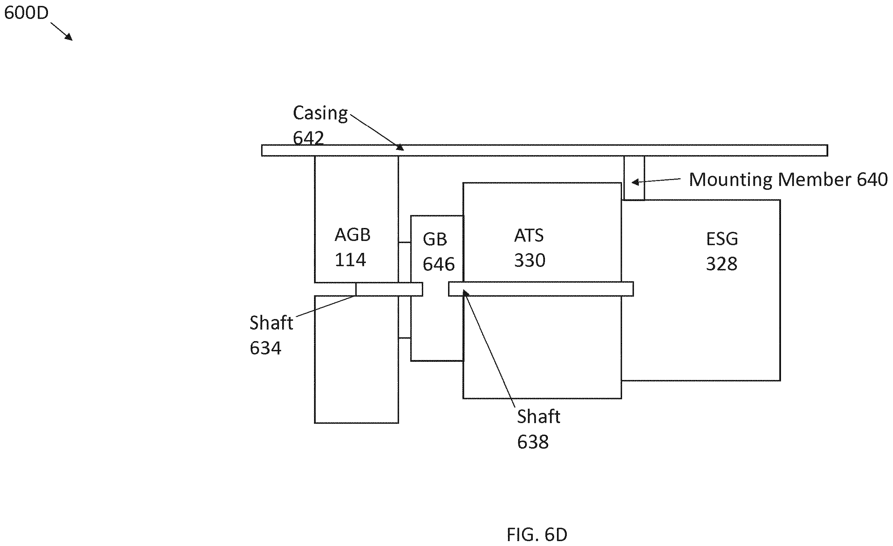

In accordance with some examples not forming part of the invention as claimed, a DMSG system 600D is illustrated in Fig. 6D. System 600D is similar to system 600B with the addition of gearbox 646.

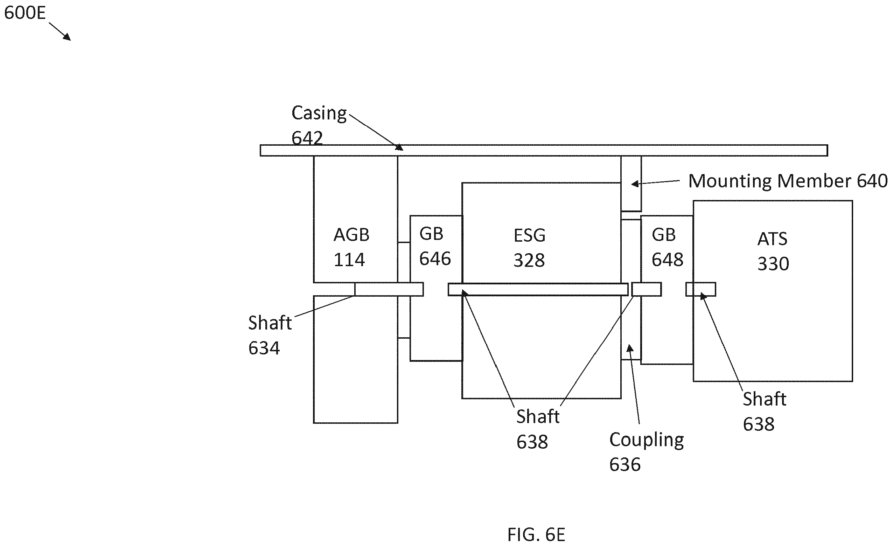

In accordance with some examples not forming part of the invention as claimed, a DMSG system 600E is illustrated in Fig. 6E. System 600E is similar to system 600C with the addition of another gearbox 648. In this embodiment, gearbox 646 is configured to multiply the torque outputted from ESG 328 and provide it to the AGB 114 via input shaft 634 at a design torque load. ATS 330 is configured to provide its starting torque at a different speed than ESG 328. As such, gearbox 648 is provided such that the output of ATS 330 is matched to the designed input of gearbox 646. ATS 330 may be selectively coupled to gearbox 648, or, as shown, gearbox 648 may be selectively coupleable to shaft 638 of ESG 328. In accordance with some embodiments, gearbox 648 has an input-to-output ratio of less than one.

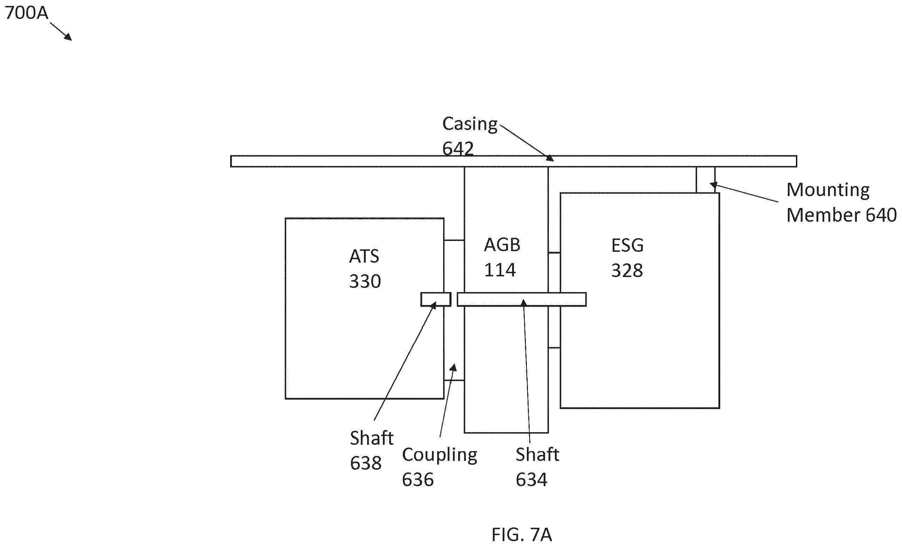

In accordance with some examples not forming part of the invention as claimed, a DMSG system 700A is illustrated in Fig. 7A. System 700A may comprise the same components performing the same functions as described above with respect to system 600A. However, the ATS 330 of system 700A is mounted on a side of the AGB 114 opposite of the side to which ESG 328 is mounted such that the AGB 114 is located between the two. This embodiment may result a smaller axial extension of the DMSG away from AGB 114 when compared to the DMSGs illustrated in systems 600A-E. Additionally, the bending moment placed the AGB 114 may be reduced because the weight of the ESG 328 is, at least partially, countered by the weight of ATS 330.

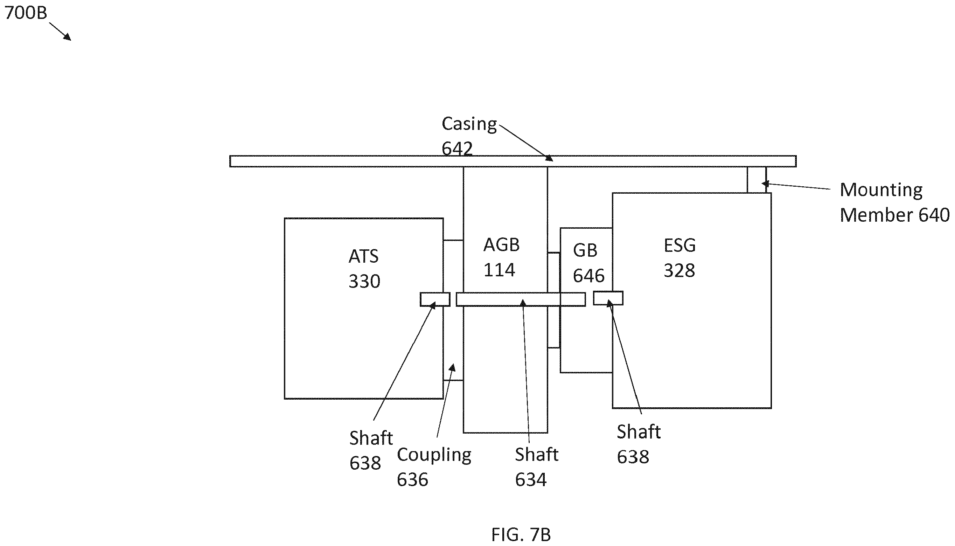

In accordance with some examples not forming part of the invention as claimed, a DMSG system 700B is illustrated in Fig. 7B. System 700B may comprise the same components performing the same functions as described above with respect to system 700A, however, system 700B has an additional gearbox 646. Gearbox 646 may be coupled to input shaft 634 and the output shaft 638 of ESG 328. ESG 328 may be coupled to AGB 114 through gearbox 646. In accordance with some examples not forming part of the invention as claimed, gearbox 646 may have an input-to-output ratio of less than one.

In accordance with some examples not forming part of the invention as claimed, ATS 330 of system 700B may be coupled to AGB 114 through gearbox 646. For example, a lay shaft (not shown) may couple the ATS 330 and gearbox 646. The lay shaft may be located radially inward (toward casing 642) or outward (away from casing 642) of a portion of the AGB 114 such that it may extending axially between the ATS 330 and gearbox 646. In this example, ATS 330 and ESG 328 may be connected to AGB 114 via the same pad on the same side of the AGB despite the AGB 114 separating the two starters. This embodiment may require additional support elements to support the ATS 330. These additional support elements may couple the ATS 330 and the casing 642, may couple the ATS 330 and ESG 328, or both.

In accordance with some examples not forming part of the invention as claimed, ESG 328 may be coupled to the input shaft 634 of AGB 114 via a lay shaft (not shown). In such an embodiment, ESG 328 may be located on a side of the AGB 114 that is opposite to the pad associate with the input shaft 634. Gearbox 646 may be located on either side of the AGB 114, such that the lay shaft (not shown) is coupled either between the gearbox 646 and input shaft 634 or between ESG 328 and gearbox 646. The lay shaft may be located radially inward (toward casing 642) or outward (away from casing 642) of a portion of the AGB 114 such that it may extend axially between the ESG 328 and/or gearbox 646 and the input shaft 634.

In accordance with some embodiments, a balancing member (not shown) may be added to ATS 330, ESG 328, or both. The balancing member functions primarily to add weight to one (or both) of the starters such that the bending moment of one of the starters is more closely countered by the bending moment caused by the combined weight of the other starter and the balancing member.

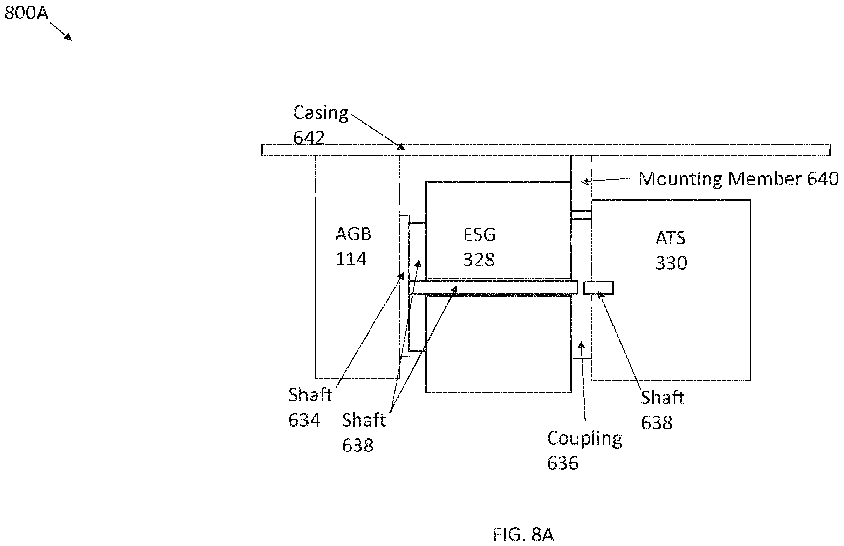

In accordance with some examples not forming part of the invention as claimed, a DMSG system 800A is illustrated in Fig. 8A. System 800A may comprise the same components performing the same functions as described above with respect to systems 600A-E and 700A-B, however, the ATS 330 and ESG 328 of system 800A are each connected to the input shaft 634 of AGB 114 separately from one another. Like systems 600A-E, ATS 330 and ESG 328 may be mounted on shafts that are coaxial with one another. Specifically, ATS 330 has an output shaft 638 coupling ATS 330 to coupling 636. Coupling 636 has an output shaft 638 coupling the coupling 636 to the input shaft 634. ESG 328 is located radially outward from and may surround the output shaft 638 of coupling 636. ESG 328 has its own output shaft 638 that also is located radially outward from and may surround the output shaft 638 of coupling 636. ESG 328 output shaft is coupled to input shaft 634. In some embodiments, input shaft 634 may be replaced with a gear or other structure capable of receiving a rotational input from the output shafts 638.

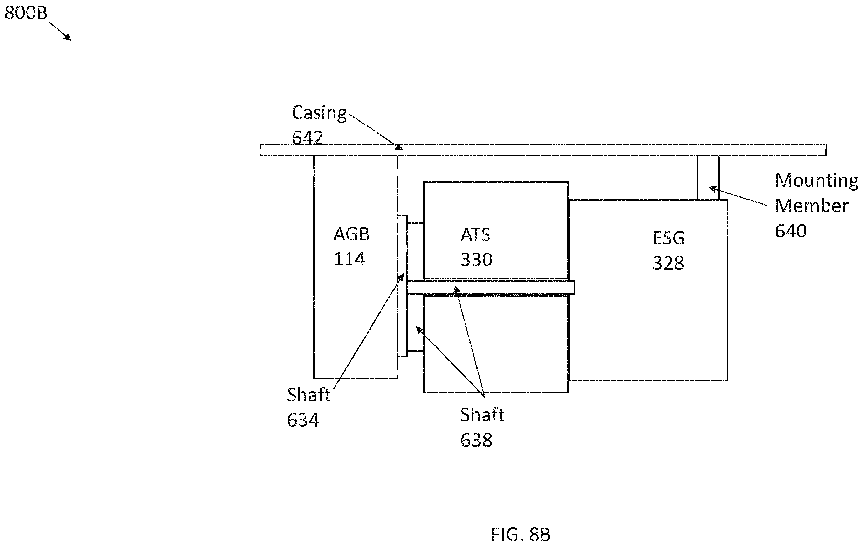

In accordance with some examples not forming part of the invention as claimed, a DMSG system 800B is illustrated in Fig. 8B. System 800B may comprise the same components performing the same functions as described above with respect to system 800A, however, in this example not forming part of the invention as claimed, ESG 328 may be separated from the AGB 114 by ATS 330.

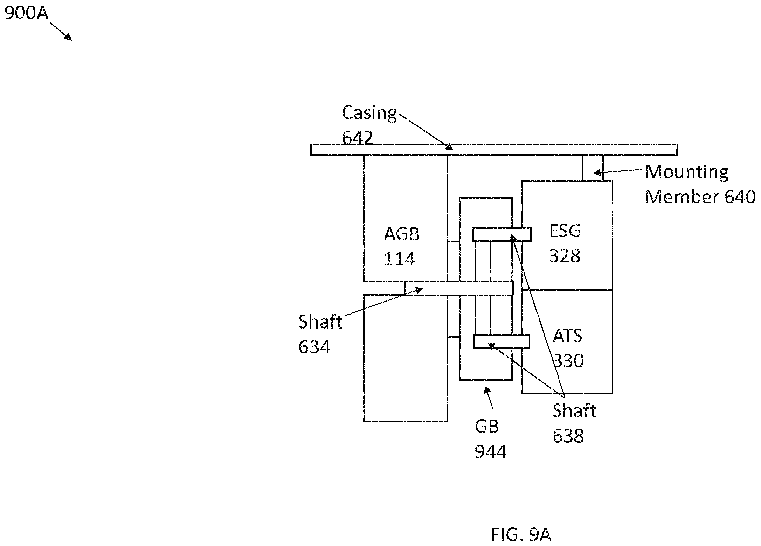

In accordance with some embodiments, a DMSG system 900A is illustrated in Fig. 9A. System 900A may comprise the same components performing the same functions as described above with respect to systems 600A-E, 700A-B, and 800A-B. However, ESG 328 and ATS 330 may be offset from one another such that neither is coaxial with the other. To accommodate this offset, a gearbox 944 may be coupled to the input shaft 634 of AGB 114 and to the respective output shafts 638 of ESG 328 and 638 of ATS 330. Gearbox 944 may contain various gears that couple the ESG 328 and ATS 330 to the gearbox 944. These gears may provide for different gear reduction ratios to account for the different operating speeds and torque output of ESG 328 and ATS 330.

In accordance with some embodiments, one of the ESG 328 or ATS 330 may be coaxial with input shaft 634. In some embodiments, one of the ATS 330 or ESG 328 may be located radially outward (*i*.*e*., with respect the turbine engine - here, away from casing 642) of the other. In some embodiments, ATS 330 may be located at a different circumferential position about the turbine engine than ESG 328.

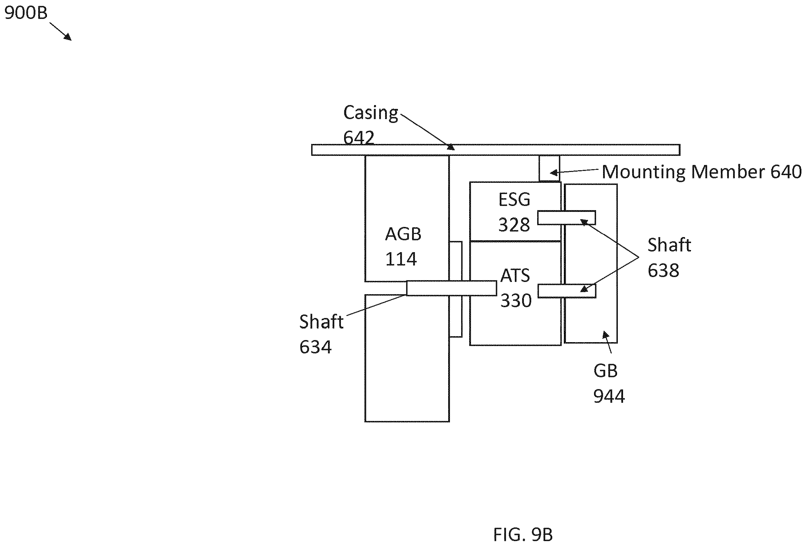

In accordance with some examples not forming part of the invention as claimed, a DMSG system 900B is illustrated in Fig. 9B. System 900B may comprise the same components performing the same functions as described above with respect to systems 900A. The primary difference between system 900A and 900B is that gearbox 944 is now separated from the AGB 114 by ESG 328 and ATS 330. ESG 328 outputs via shaft 638 to gearbox 944. Gearbox 944 outputs to ATS 330 via shaft 638. ATS 330 is coupled to the input shaft 634 of the AGB 114.

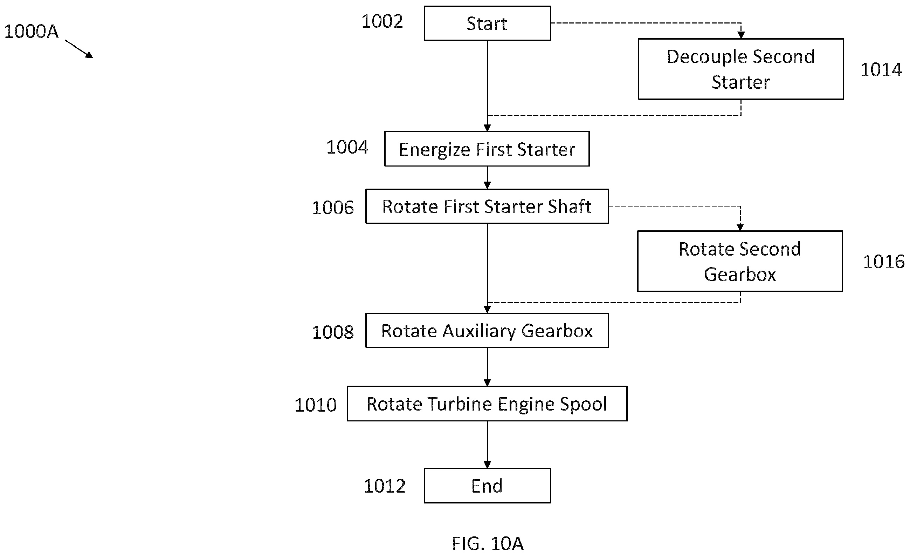

In accordance with some embodiments, a first mode 1000A of starting a turbine engine is provided for in Fig. 10A. The method may be applied to a turbine engine having a dual mode starter generator as described above in one or more of Figs. 3 to 9B. The method may start at block 1002. At block 1004, a first starter may be energized. The first starter may be either an ESG or an ATS. Accordingly, "energized" should be understood to mean supplying the energy required to operate the starter - electricity for an electric starter and a fluid for an ATS. Energizing the first starter causes the shaft of the first starter to rotate at block 1006. Being coupled to the first starter shaft, the auxiliary gearbox will also rotate due to the rotation of the auxiliary gearbox input shaft at block 1008. The auxiliary gearbox is rotationally coupled to a spool of the turbine engine. Therefore, the turbine spool will begin to rotate at block 1010. The method may end at block 1012.

In accordance with some embodiments, the first mode 1000A may further comprise decoupling the second starter from the auxiliary gearbox at block 1014. This decoupling may occur prior to energizing the first starter. The second starter may be either the ATS or the ESG. The first mode 1000A may further comprise rotating a second gearbox at block 1016. The second gearbox may be coupled to both the first starter and the auxiliary gear box. In some embodiments, the second gearbox may be coupled to and in between the first and second starters.

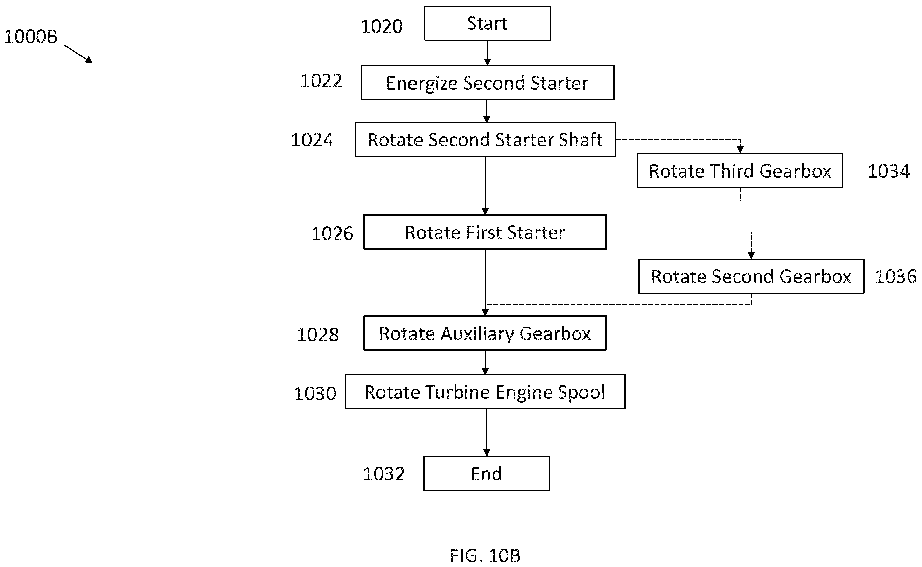

In accordance with some embodiments, a second mode 1000B of starting a turbine engine is illustrated in Fig. 10B. Like the first mode 1000A, the second mode may be applied to a turbine engine having a dual mode starter generator as described above in one or more of Figs. 3 to 9B. The method may start at block 1020. At block 1022, the second starter may be energized. The second starter may be either an ESG or an ATS. Energizing the second starter cause the second starter shaft to rotate at block 1024. The first starter may be rotated at 1026 because the first starter and second starter may be coupled to one another via their respective shafts. In turn, the auxiliary gearbox is rotated (block 1028), as is a spool of the turbine engine (block 1032). The method may end at block 1032.

In accordance with some embodiments, a third gearbox may be rotated in block 1034. The third gearbox may be couple the second starter and the first starter. The third hear box may have an input-to-output ratio of less than one. In accordance with some embodiments, a second gearbox may be rotated in block 1036. The second gearbox may couple the first starter and the auxiliary gearbox. The second gearbox may have an input-to-output ratio of greater than one.

In accordance with some embodiments, the rotation of the second starter is independent of the rotation of the first starter shaft during the operation of the turbine. For example, the ATS may be configured to be decoupled from the auxiliary gearbox such that only the ESG is rotated while the turbine is operating.

In accordance with some embodiments, either the first mode 1000A or second mode 1000B may further comprise disconnecting an electric starter from an auxiliary power source and connecting the electric starter to an auxiliary load after the turbine engine has been started.

Although examples are illustrated and described herein, embodiments are nevertheless not limited to the details shown, since various modifications and structural changes may be made therein by those of ordinary skill within the scope of the claims.

## Claims

1. A system for starting a turbine engine (100), comprising:
An auxiliary gearbox (114) having a gearbox input shaft (634), the auxiliary gearbox (114), in use, being coupled to the turbine engine (100) and the gearbox input shaft (634), in use, being coupled to a spool of the turbine engine (100) via the auxiliary gearbox;
A second gearbox (944);
an electric starter (328) having an electric-starter shaft (638), wherein the second gearbox (944) couples the electric-starter shaft (638) to the gearbox input shaft (634); and
an air turbine starter (330) having an air-turbine-starter shaft (638), wherein the second gearbox (944) couples the air-turbine starter shaft (638) to the gearbox input shaft (634);
wherein the electric-starter shaft (638) and the air-turbine-starter shaft (638) are radially displaced, circumferentially displaced, or both radially and circumferentially displaced, with respective to an axis of the turbine engine (100), from one another; and wherein the electric starter (328) is a starter-generator configured to be connected alternatively between an auxiliary power source and an auxiliary load.

2. The system of claim 1, wherein the second gearbox (944) has a first gear ratio between the electric-starter shaft (638); and the gearbox input shaft (634), and a second gear ratio between the air-turbine-starter shaft (638) and the gearbox input shaft (634).

3. The system of claim 1, wherein the air-turbine-starter shaft (638) is selectively coupleable to the gearbox input shaft (634).

4. The system of claim 1, wherein the electric-starter shaft (638) is selectively coupleable to the gearbox input shaft (634).

5. The system of any one of claims 1 to 4, further comprising a mounting member (640) coupling one of the electric starter (328) and the air turbine starter (330) to a casing (642) of the turbine engine (100).

6. The system of claim 5, wherein the mounting member (640) comprises a damping member.

7. The system of any one of claims 1 to 6, wherein both of the electric starter (328) and the air turbine starter (330) are located on the same side of the gearbox (114).

8. The system of any one of claims 1 to 7, wherein the electric-starter shaft (638) and the air-turbine-starter shaft (638) are radially displaced, with respect to the axis of the turbine engine (100), from the gearbox input shaft (634).

9. The system of any one of claims 1 to 7, wherein the electric-starter shaft (638) is coaxial with the gearbox input shaft (634).

10. The system of any one of claims 1 to 7, wherein the air-turbine-starter shaft (638) is coaxial with the gearbox input shaft (634).

11. A method of operating a turbine starting system, of any one of claims 1 to 10 the method comprising:
rotating (1008) the gearbox input shaft (634), wherein the rotation of the gearbox input shaft (634) rotates (1010) the turbine engine (100); and
rotating (1006) the electric starter (328).

12. The method of claim 11, further comprising:
rotating (1024) the air turbine starter (330), wherein the rotation of the air turbine starter (330) causes the rotation of the gearbox input shaft (634) and the electric starter (328).

13. The method of claim 11, further comprising:
decoupling (1014) the air turbine starter (330) from the gearbox input shaft (634), wherein the rotation of the gearbox input shaft (634) is accomplished by applying a motive force to the electric starter (328) that cause the rotation of the electric starter (328).

14. The method of claim 11, wherein the electric starter (328) is connected alternatively between an auxiliary power source and an auxiliary load.

## Patentansprüche

1. System zum Starten eines Turbinentriebwerks (100), umfassend:
ein Hilfsgetriebe (114) mit einer Getriebeeingangswelle (634), wobei das Hilfsgetriebe (114) im Gebrauch mit dem Turbinentriebwerk (100) gekoppelt ist und die Getriebeeingangswelle (634) im Gebrauch über das Hilfsgetriebe mit einer Welle des Turbinentriebwerks (100) gekoppelt ist;
ein zweites Getriebe (944);
einen Elektrostarter (328) mit einer Elektrostarterwelle (638), wobei das zweite Getriebe (944) die Elektrostarterwelle (638) mit der Getriebeeingangswelle (634) koppelt; und
einen Luftturbinenstarter (330) mit einer Luftturbinenstarterwelle (638), wobei das zweite Getriebe (944) die Luftturbinenstarterwelle (638) mit der Getriebeeingangswelle (634) koppelt;
wobei die Elektrostarterwelle (638) und die Luftturbinenstarterwelle (638) bezüglich einer Achse des Turbinentriebwerks (100) voneinander radial versetzt, in Umfangsrichtung versetzt oder sowohl radial als auch in Umfangsrichtung versetzt sind; und wobei der Elektrostarter (328) ein Starter-Generator ist, der dazu konfiguriert ist, alternativ zwischen einer Hilfsstromquelle und
einem Nebenverbraucher geschaltet zu werden.

2. System nach Anspruch 1, wobei das zweite Getriebe (944) ein erstes Übersetzungsverhältnis zwischen der Elektrostarterwelle (638); und der Getriebeeingangswelle (634) und ein zweites Übersetzungsverhältnis zwischen der Luftturbinenstarterwelle (638) und der Getriebeeingangswelle (634) aufweist.

3. System nach Anspruch 1, wobei die Luftturbinenstarterwelle (638) selektiv mit der Getriebeeingangswelle (634) koppelbar ist.

4. System nach Anspruch 1, wobei die Elektrostarterwelle (638) selektiv mit der Getriebeeingangswelle (634) koppelbar ist.

5. System nach einem der Ansprüche 1 bis 4, ferner umfassend ein Montageelement (640), das einen von dem Elektrostarter (328) und dem Luftturbinenstarter (330) mit einem Gehäuse (642) des Turbinentriebwerks (100) koppelt.

6. System nach Anspruch 5, wobei das Montageelement (640) ein Dämpfungselement umfasst.

7. System nach einem der Ansprüche 1 bis 6, wobei sich sowohl der Elektrostarter (328) als auch der Luftturbinenstarter (330) auf derselben Seite des Getriebes (114) befinden.

8. System nach einem der Ansprüche 1 bis 7, wobei die Elektrostarterwelle (638) und die Luftturbinenstarterwelle (638), in Bezug auf die Achse des Turbinentriebwerks (100), von der Getriebeeingangswelle (634) radial versetzt sind.

9. System nach einem der Ansprüche 1 bis 7, wobei die Elektrostarterwelle (638) koaxial zur Getriebeeingangswelle (634) ist.

10. System nach einem der Ansprüche 1 bis 7, wobei die Luftturbinenstarterwelle (638) koaxial zur Getriebeeingangswelle (634) ist.

11. Verfahren zum Betreiben eines Turbinenstartsystems nach einem der Ansprüche 1 bis 10, wobei das Verfahren umfasst:
Drehen (1008) der Getriebeeingangswelle (634), wobei die Drehung der Getriebeeingangswelle (634) das Turbinentriebwerk (100) dreht (1010); und
Drehen (1006) des Elektrostarters (328).

12. Verfahren nach Anspruch 11, ferner umfassend:
Drehen (1024) des Luftturbinenstarters (330), wobei die Drehung des Luftturbinenstarters (330) die Drehung der Getriebeeingangswelle (634) und des Elektrostarters (328) bewirkt.

13. Verfahren nach Anspruch 11, ferner umfassend:
Entkoppeln (1014) des Luftturbinenstarters (330) von der Getriebeeingangswelle (634), wobei die Drehung der Getriebeeingangswelle (634) durch Aufbringen einer Antriebskraft auf den Elektrostarter (328) erreicht wird, die die Drehung des Elektrostarters (328) bewirkt.

14. Verfahren nach Anspruch 11, wobei der Elektrostarter (328) alternativ zwischen einer Hilfsstromquelle und einem Nebenverbraucher geschaltet wird.

## Revendications

1. Système de démarrage d'un turbomoteur (100), comprenant :
une boîte de vitesses auxiliaire (114) comportant un arbre d'entrée de boîte de vitesses (634), la boîte de vitesses auxiliaire (114), lors de l'utilisation, étant couplée au turbomoteur (100) et l'arbre d'entrée de boîte de vitesses (634), lors de l'utilisation, étant couplé à un corps du turbomoteur (100) par l'intermédiaire de la boîte de vitesses auxiliaire ;
une seconde boîte de vitesses (944) ;
un démarreur électrique (328) comportant un arbre de démarreur électrique (638), ladite seconde boîte de vitesses (944) couplant l'arbre de démarreur électrique (638) à l'arbre d'entrée de boîte de vitesses (634) ; et
un démarreur de turbine à air (330) comportant un arbre de démarreur de turbine à air (638), ladite seconde boîte de vitesses (944) couplant l'arbre de démarreur de turbine à air (638) à l'arbre d'entrée de boîte de vitesses (634) ;
ledit arbre de démarreur électrique (638) et ledit arbre de démarreur à turbine à air (638) étant déplacés radialement, déplacés circonférentiellement, ou à la fois déplacés radialement et circonférentiellement, vis-à-vis d'un axe du turbomoteur (100), l'un par rapport à l'autre ; et ledit démarreur électrique (328) étant un démarreur-générateur conçu pour être connecté alternativement entre une source d'alimentation auxiliaire et une charge auxiliaire.

2. Système selon la revendication 1, ladite seconde boîte de vitesses (944) présentant un premier rapport de vitesse entre l'arbre de démarreur électrique (638) et l'arbre d'entrée de boîte de vitesses (634), et un second rapport de vitesse entre l'arbre de démarreur de turbine à air (638) et l'arbre d'entrée de boîte de vitesses (634).

3. Système selon la revendication 1, ledit arbre de démarrage de turbine à air (638) pouvant être sélectivement couplé à l'arbre d'entrée de boîte de vitesses (634).

4. Système selon la revendication 1, ledit arbre de démarreur électrique (638) pouvant être couplé de manière sélective à l'arbre d'entrée de boîte de vitesses (634).

5. Système selon l'une quelconque des revendications 1 à 4, comprenant en outre un élément de montage (640) couplant l'un parmi le démarreur électrique (328) et le démarreur à turbine à air (330) à un carter (642) du turbomoteur (100).

6. Système selon la revendication 5, ledit élément de montage (640) comprenant un élément d'amortissement.

7. Système selon l'une quelconque des revendications 1 à 6, ledit démarreur électrique (328) et ledit démarreur à turbine à air (330) étant tous les deux situés du même côté de la boîte de vitesses (114).

8. Système selon l'une quelconque des revendications 1 à 7, ledit arbre de démarreur électrique (638) et ledit arbre de démarreur à turbine à air (638) étant déplacés radialement, par rapport à l'axe du turbomoteur (100), depuis l'arbre d'entrée de boîte de vitesses (634).

9. Système selon l'une quelconque des revendications 1 à 7, ledit arbre de démarreur électrique (638) étant coaxial à l'arbre d'entrée de boîte de vitesses (634).

10. Système selon l'une quelconque des revendications 1 à 7, ledit arbre de démarreur de turbine à air (638) étant coaxial à l'arbre d'entrée de boîte de vitesses (634).

11. Procédé de fonctionnement d'un système de démarrage de turbine selon l'une quelconque des revendications 1 à 10, le procédé comprenant :
la mise en rotation (1008) de l'arbre d'entrée de boîte de vitesses (634), ladite rotation de l'arbre d'entrée de boîte de vitesses (634) faisant tourner (1010) le turbomoteur (100) ; et
la mise en rotation (1006) du démarreur électrique (328).

12. Procédé selon la revendication 11, comprenant en outre :
la mise en rotation (1024) du démarreur de turbine à air (330), ladite rotation du démarreur de turbine à air (330) provoquant la rotation de l'arbre d'entrée de boîte de vitesses (634) et du démarreur électrique (328).

13. Procédé selon la revendication 11, comprenant en outre :
le découplage (1014) du démarreur de turbine à air (330) de l'arbre d'entrée de boîte de vitesses (634), ladite rotation de l'arbre d'entrée de boîte de vitesses (634) étant accomplie en appliquant une force motrice sur le démarreur électrique (328) qui provoque la rotation du démarreur électrique (328).

14. Procédé selon la revendication 11, ledit démarreur électrique (328) est connecté alternativement entre une source d'alimentation auxiliaire et une charge auxiliaire.
